# EUROPEAN PATENT APPLICATION

(11) **EP 2 317 420 A1**
(43) Date of publication of application: **04.05.2011**
(21) Application number: 10188073.0
(22) Date of filing: 19.10.2010
(51) Int. Cl.: G06F 3/044, G06F 3/041

(54) **Touch sensitive device with dielectric layer**

(30) Priority: 30.10.2009 US 610051
(71) Applicant: Apple Inc., Cupertino, CA 95014 (US)
(72) Inventor: Choi, Shin John, Cupertino, CA 95014 (US); Clayton, Joseph Edward, Cupertino, CA 95014 (US); Tang, Patrick Jee Phone, Cupertino, CA 95014 (US)
(74) Representative: Lang, Johannes

(57) **Abstract**

A touch sensitive device having a dielectric layer between a cover layer and a touch sensor layer is disclosed. The dielectric layer can reduce a negative pixel effect associated with poor grounding of an object touching the device. The dielectric layer can reduce a capacitance per unit area of the device to less than about 0.0305 picofarads per square millimeter, thereby reducing the negative pixel effect. The dielectric layer can have a thickness of about 0.50 millimeters or more and/or a dielectric constant of about 2.3 or less to reduce the negative pixel effect.

## Description

### Field

This relates generally to touch sensitive devices and, more particularly, to a touch sensitive device with a dielectric layer.

### Background

Many types of input devices are presently available for performing operations in a computing system, such as buttons or keys, mice, trackballs, joysticks, touch sensor panels, touch screens and the like. Touch sensitive devices, such as touch screens, in particular, are becoming increasingly popular because of their ease and versatility of operation as well as their declining price. A touch sensitive device can include a touch sensor panel, which can be a clear or opaque panel with a touch-sensitive surface. In some instances, the touch sensitive device can also include a display device such as a liquid crystal display (LCD) that can be positioned partially or fully behind the panel so that the touch-sensitive surface can cover at least a portion of the viewable area of the display device or that can be remote from the panel so that the touch-sensitive surface can interface with the viewable area of the display device. The touch sensitive device can allow a user to perform various functions by touching the touch sensor panel using a finger, stylus or other object at a location often dictated by a user interface (UI) being displayed by the display device. In general, the touch sensitive device can recognize a touch event and the position of the touch event on the touch sensor panel, and the computing system can then interpret the touch event in accordance with the display appearing at the time of the touch event, and thereafter can perform one or more actions based on the touch event.

When the object touching the touch sensitive device is poorly grounded, touch output values indicative of a touch event can be erroneous or otherwise distorted. The possibility of such erroneous or distorted values can further increase when two or more simultaneous touch events occur at the device.

### Summary

This relates to a touch sensitive device having a dielectric layer between a cover layer and a touch sensor layer. The dielectric layer can reduce a negative pixel effect associated with poor grounding of an object touching the device. To achieve this reduction, the dielectric layer can reduce a capacitance per unit area of the device to less than about 0.0305 picofarads per square millimeter. The dielectric layer can have a thickness of about 0.50 millimeters or more and/or a dielectric constant of about 2.3 or less. The ability to reduce a negative pixel effect in a touch sensitive device can advantageously provide faster and more accurate touch detection, as well as power savings, by not having to repeat measurements subject to poor grounding conditions. Additionally, the device can more robustly adapt to various grounding conditions of a user or other objects.

### Brief Description of the Drawings

FIG. 1 illustrates an exemplary stackup of a touch sensitive device having a dielectric layer according to various embodiments.

FIG. 2 illustrates an exemplary method of fabricating a touch sensitive device having a dielectric layer according to various embodiments.

FIG. 3 depicts a negative pixel effect in an exemplary touch sensitive device having a dielectric layer according to various embodiments.

FIG. 4 illustrates another exemplary stackup of a touch sensitive device having a dielectric layer according to various embodiments.

FIG. 5 illustrates an exemplary computing system that can incorporate a touch sensitive device having a dielectric layer according to various embodiments.

### Detailed Description

In the following description of various embodiments, reference is made to the accompanying drawings which form a part hereof, and in which it is shown by way of illustration specific embodiments which can be practiced. It is to be understood that other embodiments can be used and structural changes can be made without departing from the scope of the various embodiments.

This relates to a touch sensitive device having a dielectric layer between a cover layer and a touch sensor layer. The dielectric layer can reduce a negative pixel effect associated with poor grounding of an object touching the device. In some embodiments, the dielectric layer can reduce a capacitance per unit area of the device to less than about 0.0305 picofarads per square millimeter, thereby reducing the negative pixel effect. In some embodiments, the dielectric layer can have a thickness of about 0.50 millimeters or more to decrease capacitive coupling between the touch sensor layer and the poorly grounded object, thereby reducing the negative pixel effect. In some embodiments, the dielectric layer can have a dielectric constant of about 2.3 or less to reduce the negative pixel effect.

The ability to reduce a negative pixel effect in a touch sensitive device can advantageously provide faster and more accurate touch detection, as well as power savings, by not having to repeat measurements subject to poor grounding conditions. Additionally, the device can more robustly adapt to various grounding conditions of a user or other objects.

The terms "poorly grounded," "ungrounded," "not grounded," "partially grounded," "not well grounded," "improperly grounded," "isolated," and "floating" can be used interchangeably to refer to poor grounding conditions that can exist when an object is not making a low impedance electrical coupling to the ground of the touch sensitive device.

The terms "grounded," "properly grounded," and "well grounded" can be used interchangeably to refer to good grounding conditions that can exist when an object is making a low impedance electrical coupling to the ground of the touch sensitive device.

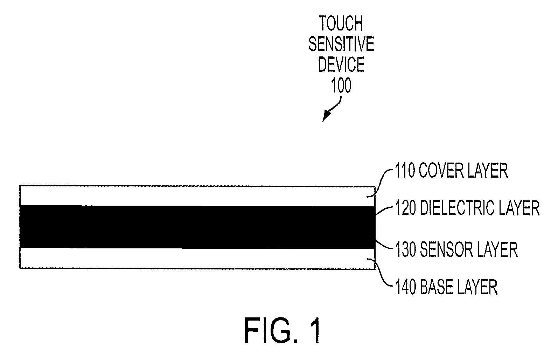

FIG. 1 illustrates an exemplary stackup of a touch sensitive device having a dielectric layer according to various embodiments. In the example of FIG. 1, touch sensitive device 100 can include cover layer 110, dielectric layer 120, touch sensor layer 130, and base layer 140. The base layer 140 can include a polymer material, such as polyethylene terephthalate (PET), to act as a substrate. Other materials such as glass can also be used as the substrate. In some embodiments, the base layer 140 can have a thickness of about 25 microns (µm). The touch sensor layer 130 can include a conductive material, such as silver, copper, indium tin oxide (ITO), and the like, that can be utilized to capacitively detect a touch at the device 100. In some embodiments, the touch sensor layer 130 can include one or more layers of conductive material that can have a collective thickness of about 80 µm. The touch sensor layer 130 can be deposited on the base layer 140. The cover layer 110 can include a transparent or opaque material, such as glass or plastic, to act as a protective and/or aesthetic covering for the device 100. In some instances, the cover layer 110 can have a thickness of about 0.55 millimeters (mm). The cover layer 110 can have a touchable surface for touching by the user and other objects and can be attached to or assembled on the dielectric layer 120.

The dielectric layer 120 can include a firm polymer material, such as polypropylene, to act as a dielectric. Alternatively, the dielectric layer 120 can include a porous polymer material, such as polyethylene plastic, to act as a dielectric. Alternatively, the dielectric layer 120 can include a composite material, such as a ceramic mixture, to act as a dielectric. Other suitable materials can also be used as a dielectric. In some embodiments, the dielectric layer 120 can have a thickness of about 0.50 mm to about 0.60 mm or more. In some embodiments, the dielectric layer 120 can have a dielectric constant of about 2.3 or less or, more preferably, about 1.5 or less. The dielectric layer 120 can be attached, assembled, or otherwise disposed between the cover layer 110 and the touch sensor layer 130. In some embodiments, the dielectric layer 120 can be non-deformable so as to maintain a substantially constant distance between the cover layer 110 and the touch sensor layer 130. Adhesive layers (not shown) can be applied to opposite surfaces of the dielectric layer 120 to adhere the dielectric layer to the cover layer 110 on one surface and to the touch sensor layer 130 on an opposite surface. The adhesive layers can include a pressure sensitive adhesive, an epoxy, a bubble free laminate, and the like. In some embodiments, the adhesive layers can each have a thickness of about 50 µm.

It is to be understood that a stackup of a touch sensitive device is not limited to that illustrated in FIG. 1, but can include other and/or additional layers according to various embodiments.

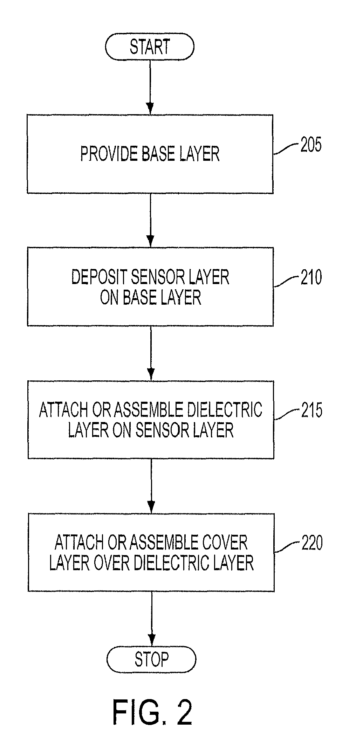

FIG. 2 illustrates an exemplary method for fabricating a touch sensitive device having a dielectric layer according to various embodiments. In the example of FIG. 2, a base layer can be provided as a substrate for a touch sensitive device (205). A touch sensor layer can be deposited on the base layer (210). For example, the touch sensor layer can be printed on the base layer in one or more layers to form sensors for capacitively detecting a touch at the touch sensitive device. A dielectric layer can be attached to or assembled on the touch sensor layer (215). For example, the dielectric layer can be printed on the touch sensor layer. Alternatively, an adhesive can be applied to the touch sensor layer prior to attaching or assembling the dielectric layer so as to secure the dielectric layer to the touch sensor layer. A cover layer can be attached or assembled over the dielectric layer (220). An adhesive can be applied to the dielectric layer prior to attaching or assembling the cover layer thereon so as to secure the cover layer to the dielectric layer.

It is to be understood that fabrication of a touch sensitive device having a dielectric layer is not limited to that illustrated in FIG. 2. Other and/or additional methods can also be utilized according to various embodiments.

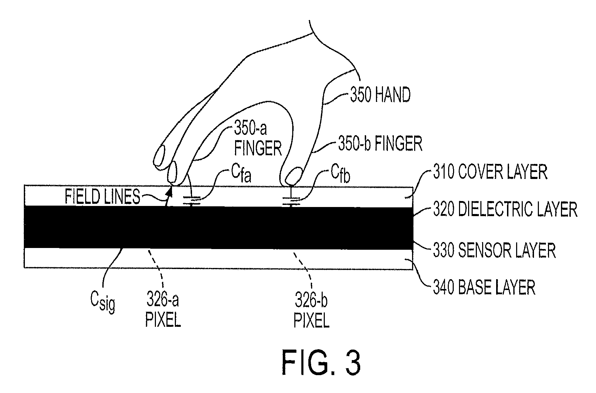

A dielectric layer as in FIG. 1 can be utilized to reduce a negative pixel effect in a touch sensitive device due to a poorly grounded object (e.g., a user) touching the device. FIG. 3 depicts a negative pixel effect in an exemplary touch sensitive device having a dielectric layer according to various embodiments. In the example of FIG. 3, touch sensor layer 330 can include an array of pixels 326 (symbolically illustrated by ovals). When pixel 326-a is electrically stimulated, a mutual capacitance Csig can form at the pixel. Electric field lines can also form at the stimulated pixel 326-a, extending out of the touch sensor layer 330. A finger 350-a touching at the stimulated pixel 326-a can block some of the electric field lines. Here, because the user is poorly grounded, charge from the blocked electric field lines can be undesirably transmitted by the finger 350-a back into the touch sensor layer 330 to form a capacitance Cfa between the finger and the touch sensor layer. At the same time, charge from the blocked electric field lines can be undesirably transmitted by touching finger 350-b at unstimulated pixel 326-b back into the touch sensor layer 330 to form a capacitance Cfb between the finger and the touch sensor layer.

As a result, instead of the mutual capacitance Csig at the stimulated pixel 326-a being reduced by a desirable amount ΔCsig, Csig can only be reduced by (ΔCsig - Cneg), where Cneg (a function of Cfa and Cfb) can represent a so-called "negative capacitance" resulting from the charge from the blocked electric field lines being undesirably coupled into the touch sensor layer 330 due to the poor grounding of the user. Touch signals can still generally indicate a touch at the stimulated pixel 326-a, but with an indication of a lesser amount of touch than actually occurred.

Similarly, the finger 350-b at the unstimulated pixel 326-b can undesirably increase that pixel's capacitance by Cneg to a capacitance above that of a no-touch condition to give the appearance of a so-called "negative pixel" or a theoretical negative amount of touch at the unstimulated pixel.

Pixels adjacent to pixels 326-a and 326-b can also experience this negative pixel effect due to the capacitances Cfa and Cfb to give the appearance of a theoretical negative amount of touch thereat.

The net result of the user being poorly grounded can be that the touch signal of the stimulated pixel being touched (e.g., pixel 326-a) can be attenuated and the adjacent pixels (e.g., pixel 326-b and others) can have negative touch signals.

To reduce this negative pixel effect, dielectric layer 320 can be attached, assembled, or otherwise disposed between cover layer 310 and touch sensor layer 330, as illustrated in FIG. 3. The dielectric layer 320 can reduce the amount of charge from the blocked electric field lines being coupled back into the touch sensor layer 330. As a result, the capacitances Cfa and Cfb between the fingers 350-a and 350-b and the touch sensor layer 330 can be reduced, which results in the capacitance per unit area of the device being reduced, thereby reducing the negative pixel effect at the pixels 326. The dielectric layer 320 can achieve this by reducing the capacitance per unit area of the touch sensitive device to a level that sufficiently reduces the negative pixel effect in the device. In some instances, the dielectric layer 320 can reduce the electric field lines extending from the touch sensor layer 330, thereby reducing the number of electric field lines blocked by the fingers and thus the touch sensitivity of the touch sensitive device. However, this loss of touch sensitivity can be small compared to the benefit of reducing the negative pixel effect by the dielectric layer 320.

Table 1 shows examples of capacitances per unit area for touch sensitive devices having and not having dielectric layers according to various embodiments.

**Table 1. Device Capacitance per Unit Area**

| | Cover layer | Cover layer | Cover layer + Dielectric porous polyethylene layer | Cover layer + Dielectric firm polypropylene layer |
|---|---|---|---|---|
| Cover layer dielectric constant | 7.5 | 7.5 | 7.5 | 7.5 |
| Cover layer thickness (mm) | 0.55 | 1.15 | 0.55 | 0.55 |
| Cover layer capacitance per unit area (pF/mm²) | 0,121 | 0.0577 | 0.121 | 0.121 |
| Dielectric layer dielectric constant | -- | -- | 1.5 | 2.3 |
| Dielectric layer thickness (mm) | -- | -- | 0.60 | 0.50 |
| Dielectric layer capacitance per unit area (pF/mm²) | -- | -- | 0.0221 | 0.0407 |
| Touch sensitive device capacitance per unit area (pF/mm²) | 0.121 | 0.0577 | 0.0187 | 0.0305 |

As shown in Table 1, the capacitance per unit area of a touch sensitive device having a dielectric layer (which can be the series capacitance per unit area of the cover layer and the dielectric layer) can be significantly reduced over that of a touch sensitive device without a dielectric layer (which can be the capacitance per unit area of the cover layer). For example, the touch sensitive device having only a 0.55 mm cover layer can have a capacitance per unit area (0.121 picofarads per square millimeter (pF/mm²)) approximately 6.5 times that of the touch sensitive device having a dielectric porous polyethylene layer (0.0187 pF/mm²) and approximately 4.0 times that of the touch sensitive device having a dielectric firm polypropylene layer (0.0305 pF/mm²). The touch sensitive device having only a 1.15 mm cover layer can have a capacitance per unit area (0.0577 pF/mm²) that is approximately 2.0 times lower than that of the touch sensitive device having only a 0.55 mm cover layer. However, the touch sensitive device having only a 1.15 mm cover layer can still have a capacitance per unit area approximately 3.0 times that of the touch sensitive device having a dielectric porous polyethylene layer and approximately 2.0 times that of the touch sensitive device having a dielectric firm polypropylene layer. The reduced capacitance per unit area in the presence of a dielectric layer can lead to a reduced negative pixel effect.

It is to be understood that the touch sensitive device according to various embodiments is in no way limited by the examples shown in Table 1, but can include different and/or additional metrics and values for reducing the negative pixel effect. For example, the thickness and/or the dielectric constant of the dielectric layer can be varied according to the needs of the device to decrease the capacitive coupling between a touching finger and a touch sensor layer, to achieve a reduced capacitance per unit area, and to reduce the negative pixel effect. Similar variations can be made in the cover layer in conjunction with the dielectric layer according to the needs of the device. Additionally, the capacitance per unit area can vary depending on whether the touch sensor layer is formed in a continuous plane or in a pattern with gaps between sensor electrodes and/or whether the touching finger (or object) forms a continuous conductive plane.

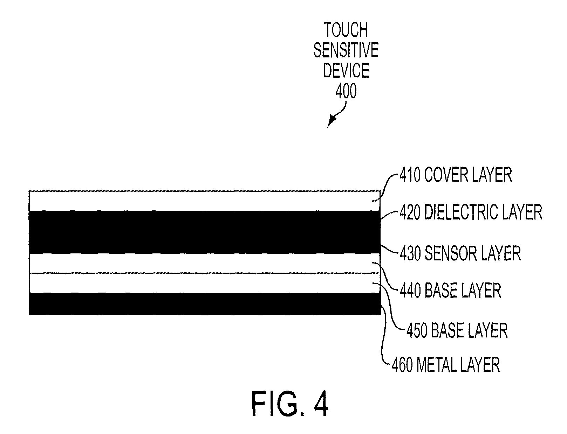

FIG. 4 illustrates another exemplary stackup of a touch sensitive device having a dielectric layer according to various embodiments. In the example of FIG. 4, touch sensitive device 400 can include cover layer 410, dielectric layer 420, touch sensor layer 430, first base layer 440, second base layer 450, and metal layer 460. The second base layer 450 can include a polymer material, such as PET, to act as a substrate. Other materials such as glass can also be used as the substrate. In some embodiments, the second base layer 450 can have a thickness of about 100 µm. The metal layer 460 can include a conductive material, such as aluminum, copper, ITO, and the like, that can be utilized to provide a ground shield, e.g., between the touch sensor layer 430 and other device circuitry, or otherwise transmit electric signals thereat. In some embodiments, the metal layer 460 can have a thickness of about 10 µm. The metal layer 460 can be deposited on the second base layer 450.

The cover layer 410, dielectric layer 420, touch sensor layer 430, and first base layer 440 can correspond to the cover layer 110, dielectric layer 120, touch sensor layer 130, and base layer 140, respectively, as described in FIG. 1. The first base layer 440 of FIG. 4 can be attached to the second base layer 450 opposite the metal layer 460. As described in FIG. 1, adhesive layers (not shown) can be applied to the dielectric layer 420 to adhere one surface of the dielectric layer to the cover layer 410 and an opposite surface of the dielectric layer to the touch sensor layer 430. Similarly, an adhesive layer (not shown) can be applied to the second base layer 450 to adhere one surface of the layer to the first base layer 440.

As shown in Table 1, the dielectric layer 420 can reduce the capacitance per unit area of the touch sensitive device 400 to less than about 0.0305 picofarads per square millimeter and, more preferably, to less than about 0.0187 picofarads per square millimeter, thereby reducing a negative pixel effect in the device.

It is to be understood that a stackup of a touch sensitive device is not limited to that illustrated in FIG. 4, but can include other and/or additional layers according to various embodiments.

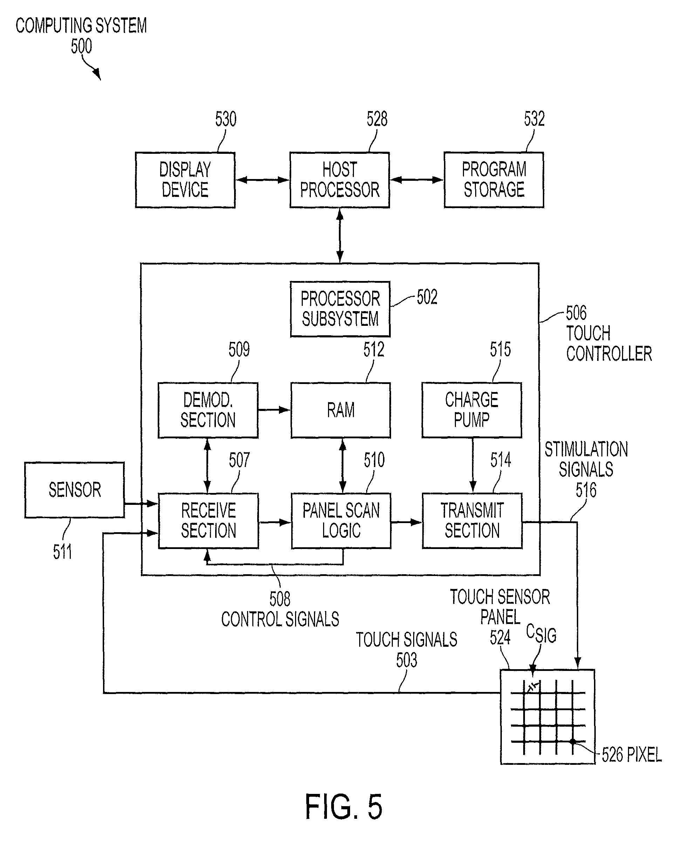

FIG. 5 illustrates an exemplary computing system 500 that can include a touch sensitive device having a dielectric layer according to various embodiments described herein. In the example of FIG. 5, computing system 500 can include touch controller 506. The touch controller 506 can be a single application specific integrated circuit (ASIC) that can include one or more processor subsystems 502, which can include one or more main processors, such as ARM968 processors or other processors with similar functionality and capabilities. However, in other embodiments, the processor functionality can be implemented instead by dedicated logic, such as a state machine. The processor subsystems 502 can also include peripherals (not shown) such as random access memory (RAM) or other types of memory or storage, watchdog timers and the like. The touch controller 506 can also include receive section 507 for receiving signals, such as touch signals 503 of one or more sense channels (not shown), other signals from other sensors such as sensor 511, etc. The touch controller 506 can also include demodulation section 509 such as a multistage vector demodulation engine, panel scan logic 510, and transmit section 514 for transmitting stimulation signals 516 to touch sensor panel 524 to drive the panel. The panel scan logic 510 can access RAM 512, autonomously read data from the sense channels, and provide control for the sense channels. In addition, the panel scan logic 510 can control the transmit section 514 to generate the stimulation signals 516 at various frequencies and phases that can be selectively applied to rows of the touch sensor panel 524.

The touch controller 506 can also include charge pump 515, which can be used to generate the supply voltage for the transmit section 514. The stimulation signals 516 can have amplitudes higher than the maximum voltage by cascading two charge store devices, e.g., capacitors, together to form the charge pump 515. Therefore, the stimulus voltage can be higher (e.g., 6V) than the voltage level a single capacitor can handle (e.g., 3.6 V). Although FIG. 5 shows the charge pump 515 separate from the transmit section 514, the charge pump can be part of the transmit section.

Touch sensor panel 524 can include a dielectric layer to reduce a negative pixel effect according to various embodiments. The dielectric layer can be disposed on a capacitive sensing medium of the panel 524 having row traces (e.g., drive lines) and column traces (e.g., sense lines), although other sensing media and other physical configurations can also be used. The row and column traces can be formed from a substantially transparent conductive medium such as Indium Tin Oxide (ITO) or Antimony Tin Oxide (ATO), although other transparent and non-transparent materials such as copper can also be used. The traces can also be formed from thin non-transparent materials that can be substantially transparent to the human eye. In some embodiments, the row and column traces can be perpendicular to each other, although in other embodiments other non-Cartesian orientations are possible. For example, in a polar coordinate system, the sense lines can be concentric circles and the drive lines can be radially extending lines (or vice versa). It should be understood, therefore, that the terms "row" and "colum" as used herein are intended to encompass not only orthogonal grids, but the intersecting or adjacent traces of other geometric configurations having first and second dimensions (e.g. the concentric and radial lines of a polar-coordinate arrangement). The rows and columns can be formed on, for example, a single side of a substantially transparent substrate separated by a substantially transparent dielectric material, on opposite sides of the substrate, on two separate substrates separated by the dielectric material, etc.

Where the traces pass above and below (intersect) or are adjacent to each other (but do not make direct electrical contact with each other), the traces can essentially form two electrodes (although more than two traces can intersect as well). Each intersection or adjacency of row and column traces can represent a capacitive sensing node and can be viewed as picture element (pixel) 526, which can be particularly useful when the touch sensor panel 524 is viewed as capturing an "image" of touch. (In other words, after the touch controller 506 has determined whether a touch event has been detected at each touch sensor in the touch sensor panel, the pattern of touch sensors in the multi-touch panel at which a touch event occurred can be viewed as an "image" of touch (e.g. a pattern of fingers touching the panel).) The capacitance between row and column electrodes can appear as a stray capacitance Cstray when the given row is held at direct current (DC) voltage levels and as a mutual signal capacitance Csig when the given row is stimulated with an alternating current (AC) signal. The presence of a finger or other object near or on the touch sensor panel can be detected by measuring changes to a signal charge Qsig present at the pixels being touched, which can be a function of Csig. The signal change Qsig can also be a function of a capacitance Cbody of the finger or other object to ground.

Computing system 500 can also include host processor 528 for receiving outputs from the processor subsystems 502 and performing actions based on the outputs that can include, but are not limited to, moving an object such as a cursor or pointer, scrolling or panning, adjusting control settings, opening a file or document, viewing a menu, making a selection, executing instructions, operating a peripheral device coupled to the host device, answering a telephone call, placing a telephone call, terminating a telephone call, changing the volume or audio settings, storing information related to telephone communications such as addresses, frequently dialed numbers, received calls, missed calls, logging onto a computer or a computer network, permitting authorized individuals access to restricted areas of the computer or computer network, loading a user profile associated with a user's preferred arrangement of the computer desktop, permitting access to web content, launching a particular program, encrypting or decoding a message, and/or the like. The host processor 528 can also perform additional functions that may not be related to panel processing, and can be coupled to program storage 532 and display device 530 such as an LCD display for providing a UI to a user of the device. In some embodiments, the host processor 528 can be a separate component from the touch controller 506, as shown. In other embodiments, the host processor 528 can be included as part of the touch controller 506. In still other embodiments, the functions of the host processor 528 can be performed by the processor subsystem 502 and/or distributed among other components of the touch controller 506. The display device 530 together with the touch sensor panel 524, when located partially or entirely under the touch sensor panel or when integrated with the touch sensor panel, can form a touch sensitive device such as a touch screen.

Note that one or more of the functions described above can be performed, for example, by firmware stored in memory (e.g., one of the peripherals) and executed by the processor subsystem 502, or stored in the program storage 532 and executed by the host processor 528. The firmware can also be stored and/or transported within any computer readable storage medium for use by or in connection with an instruction execution system, apparatus, or device, such as a computer-based system, processor-containing system, or other system that can fetch the instructions from the instruction execution system, apparatus, or device and execute the instructions. In the context of this document, a "computer readable storage medium" can be any medium that can contain or store the program for use by or in connection with the instruction execution system, apparatus, or device. The computer readable storage medium can include, but is not limited to, an electronic, magnetic, optical, electromagnetic, infrared, or semiconductor system, apparatus or device, a portable computer diskette (magnetic), a random access memory (RAM) (magnetic), a read-only memory (ROM) (magnetic), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

The firmware can also be propagated within any transport medium for use by or in connection with an instruction execution system, apparatus, or device, such as a computer-based system, processor-containing system, or other system that can fetch the instructions from the instruction execution system, apparatus, or device and execute the instructions. In the context of this document, a "transport medium" can be any medium that can communicate, propagate or transport the program for use by or in connection with the instruction execution system, apparatus, or device. The transport medium can include, but is not limited to, an electronic, magnetic, optical, electromagnetic or infrared wired or wireless propagation medium.

It is to be understood that the touch sensor panel is not limited to touch, as described in FIG. 5, but can be a proximity panel or any other panel according to various embodiments. In addition, the touch sensor panel described herein can be either a single-touch or a multi-touch sensor panel.

It is further to be understood that the computing system is not limited to the components and configuration of FIG. 5, but can include other and/or additional components in various configurations according to various embodiments.

Therefore, according to the above, some embodiments of the disclosure comprise a touch sensitive device including a cover layer having a touchable surface, a touch sensor layer, and a dielectric layer having a thickness of about 0.50 millimeters assembled between the cover layer and the touch sensor layer to decrease capacitive coupling between the touch sensor layer and an ungrounded object proximate to the touchable surface, a first base layer configured to support the touch sensor layer, the first base layer having a thickness of about 25 microns, a metal layer configured to provide a ground shield, the metal layer having a thickness of about 10 microns, and a second base layer adjacent to the first base layer and configured to support the metal layer, the second base layer having a thickness of about 100 microns, wherein the dielectric layer is configured to have a thickness for decreasing the capacitive coupling. In other embodiments, the dielectric layer and the cover layer are configured to have a combined thickness for decreasing the capacitive coupling.

Some embodiments of the disclosure comprise a touch sensor layer configured to sense an object touching the device, and a dielectric layer having a dielectric constant of about 2.3 or less attached over the touch sensor layer to substantially reduce a negative pixel effect in the device that is associated with a grounding condition of the object, wherein the dielectric layer is configured to substantially reduce an amount of charge from being transferred from the object into the touch sensor layer when the object is not grounded.

Some embodiments of the disclosure comprise a dielectric material having a capacitance per unit area of about 0.0407 picofarads per square millimeter, the dielectric layer being configured to contribute to a total capacitance per unit area in a touch sensitive device of less than about 0.0305 picofarads per square millimeter. In other embodiments, the dielectric layer is incorporated into a computing system.

Some embodiments of the disclose comprise a touch sensitive device including a cover layer having a touchable surface a dielectric layer having a thickness of about 0.50 millimeters assembled between the cover layer and the touch sensor layer to decrease capacitive coupling between the touch sensor layer and an ungrounded object proximate to the touchable surface. In other embodiments, the cover layer has a thickness of about 0.55 millimeters. In still other embodiments, the touch sensor layer has a thickness of about 80 microns. Other embodiments include a first base layer configured to support the touch sensor layer, the first base layer having a thickness of about 25 microns.

Some embodiments of the disclosure comprise a touch sensitive device including a touch sensor layer configured to sense an object touching the device, and a dielectric layer having a dielectric constant of about 2.3 or less attached over the touch sensor layer to substantially reduce a negative pixel effect in the device that is associated with a grounding condition of the object. In other embodiments, the dielectric layer is configured to substantially reduce an amount of capacitance formed between the object and the touch sensor layer when the object is not grounded.

Although embodiments have been fully described with reference to the accompanying drawings, it is to be noted that various changes and modifications will become apparent to those skilled in the art. Such changes and modifications are to be understood as being included within the scope of the various embodiments as defined by the appended claims.

## Claims

1. A touch sensitive device comprising:
a cover layer;
a touch sensor layer; and
a dielectric layer disposed between the cover layer and the touch sensor layer and configured to reduce a capacitance per unit area of the device to less than about 0.0305 picofarads per square millimeter.

2. The device of claim 1, wherein the cover layer comprises at least one of glass or plastic.

3. The device of claim 1, wherein the touch sensor layer comprises silver.

4. The device of claim 1, wherein the dielectric layer comprises polypropylene.

5. The device of claim 1, wherein the dielectric layer comprises a material configured to be non-deformable so as to maintain a distance of about 0.50 millimeters or more between the cover layer and the touch sensor layer.

6. The device of claim 1, wherein the dielectric layer comprises a material configured to have a dielectric constant of about 2.3 or less.

7. The device of claim 1, wherein the dielectric layer comprises a material configured to support an adhesive so as to adhere to at least one of the cover layer or the touch sensor layer.

8. The device of claim 1, further comprising:
at least one adhesive layer configured to adhere the dielectric layer to at least one of the cover layer or the touch sensor layer.

9. The device of claim 1, further comprising:
a first base layer configured to support the touch sensor layer that has at least one printed layer.

10. The device of claim 9, further comprising:
a metal layer configured to provide a ground shield, the metal layer having a thickness of about 10 microns; and
a second base layer adjacent to the first base layer and configured to support the metal layer, the second base layer having a thickness of about 100 microns.

11. The device of claim 1, wherein the touch sensor layer comprises at least one printed layer configured to form a capacitance and to have a change in the formed capacitance in association with the object's touch.

12. A method comprising:
providing a dielectric layer between a cover layer and a touch sensor layer of a touch sensitive device; and
forming with the dielectric layer a total capacitance per unit area in the device of less than about 0.0305 picofarads per square millimeter.

13. The method of claim 12, wherein the providing comprises providing a dielectric layer having a capacitance per unit area of about 0.0407 picofarads per square millimeter.

14. The method of claim 12, wherein the providing comprising providing a dielectric layer having a capacitance per unit area of about 0.0221 picofarads per square millimeter.

15. The method of claim 12, wherein the forming comprises forming with the dielectric layer a total capacitance per unit area in the device of less than about 0.0187 picofarads per square millimeter.
